Europäisches Patentamt

European Patent Office

Office européen des brevets

(11) Publication number: **0 257 761 B1**

# EUROPEAN PATENT SPECIFICATION

(45) Date of publication of patent specification: **27.02.91**   (51) Int. Cl.⁵: **G11B 5/53**

(21) Application number: **87306155.0**

(22) Date of filing: **10.07.87**

(54) **Rotary magnetic head devices.**

(30) Priority: **26.07.86 JP 176304/86**

(43) Date of publication of application:
**02.03.88 Bulletin 88/09**

(45) Publication of the grant of the patent:
**27.02.91 Bulletin 91/09**

(84) Designated Contracting States:
**AT DE FR GB IT NL**

(56) References cited:
**EP-A- 0 064 765**
**EP-A- 0 136 785**
**DE-A- 2 803 683**

**PATENT ABSTRACTS OF JAPAN, vol. 7, no. 113 (P-197)[1258], 18th May 1983; & JP - A - 58 32223**

**PATENT ABSTRACTS OF JAPAN, vol. 7, no. 266 (P-239)[1411], 26th November 1983; & JP - A - 58 147 805**

(73) Proprietor: **SONY CORPORATION**
**7-35 Kitashinagawa 6-Chome Shinagawa-ku Tokyo 141(JP)**

(72) Inventor: **Nonoyama, Hideki c/o Patent Division**
**Sony Corporation 6-7-35 Kitashinagawa Shinagawa-ku Tokyo 141(JP)**

(74) Representative: **Thomas, Christopher Hugo et al**
**D Young & Co 10 Staple Inn London WC1V 7RD(GB)**

## Description

This invention relates to rotary magnetic head devices. Such devices are for use in conjunction with a magnetic recording and/or reproducing apparatus, and more particularly, but not exclusively, in conjunction with small-sized magnetic recording and/or reproducing apparatus, such as a digital audio tape (DAT) recorder or a video tape recorder (VTR).

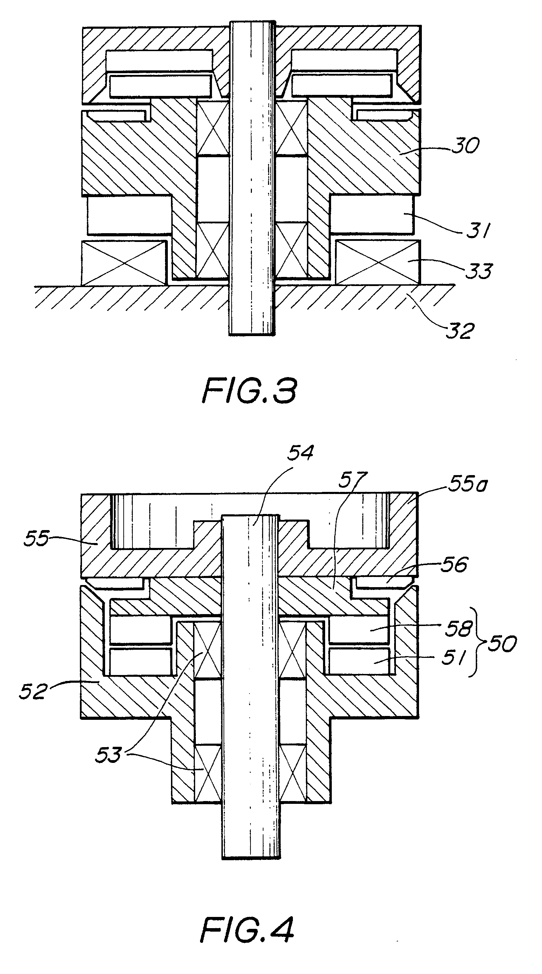

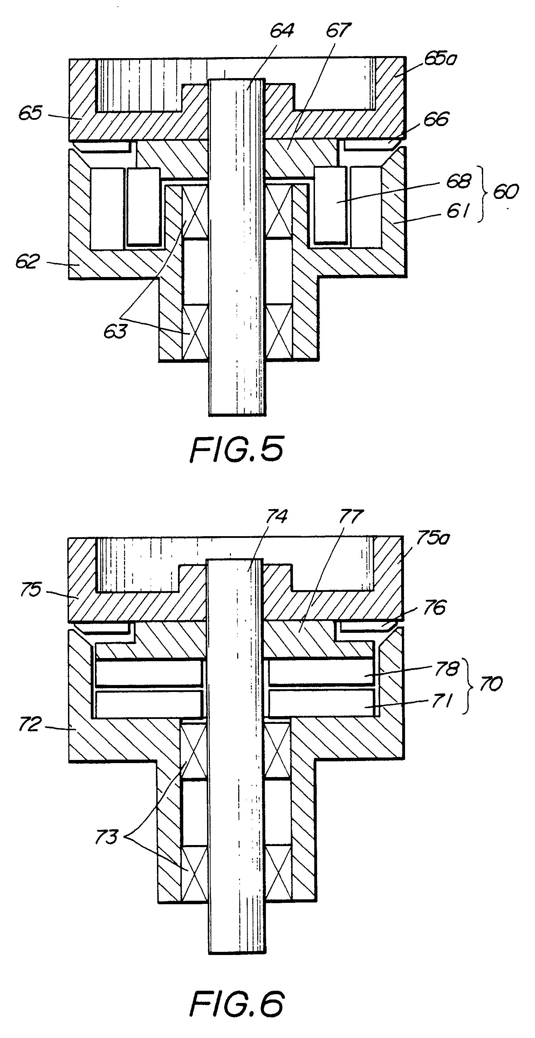

It is known to use an upper rotative drum type rotary magnetic head device shown in Figures 4 to 6 of the accompanying drawings as the rotary magnetic head device for use with magnetic recording and/or reproducing apparatus, such as a DAT recorder or a VTR. (A device similar to that of Figure 6 is shown in Figure 4 of European patent specification EP-A1-0 136 785.)

Referring to Figures 4 to 6, each magnetic head device comprises a lower drum 52, 62 or 72 which is secured to a mounting base plate, not shown, in the main body of the device, and which carries a fixed core 51, 61 or 71 of a rotary transformer 50, 60 or 70, a rotary shaft 54, 64 or 74 mounted for rotation coaxially of the lower drum 52, 62 or 72 by a bearing 53, 63 or 73 such as a ball bearing, and an upper drum 55, 65 or 75 secured to the rotary shaft 54, 64 or 74. A magnetic head 56, 66 or 76 is attached to the side of the upper drum 55, 65 or 75 facing the lower drum 52, 62 or 72. A rotary core 58, 68 or 78 of the rotary transformer 50, 60 or 70 is attached to a flange 57, 67 or 77 attached in turn to the upper drum 55, 65 or 75 in face opposition to the fixed core 51, 61 or 71 of the rotary transformer 50, 60 or 70. The upper and the lower drums 55, 52; 65, 62; and 75, 78 make up a tape guide drum on the outer periphery of which the magnetic tape is wrapped and travels with a predetermined wrapping angle. The upper drum 55, 65 or 75 is rotated by an electric motor, not shown, for driving the rotary shaft 54, 64 or 74 so that the tape contact surface at the leading part of the magnetic head 56, 66 or 76 will be brought into sliding contact with the tape surface for recording and/or reproducing information signals.

Recently, magnetic recording and/or reproducing apparatus small enough to be portable has been proposed. For reducing the size of the apparatus, it is essential to reduce the size of the rotary magnetic head device incorporated into the main body of the apparatus. To reduce the size and thickness of the rotary magnetic head device, it is required to simplify the structure, and reduce the number of components.

However, when the drum diameter is to be reduced in the rotary magnetic head device having the above-described structure, it is a problem suitably to accommodate the rotary transformer in the drum, especially in association with the bearing device for rotatably supporting the upper drum. Thus, the bearing device is required to be of a certain thickness relative to the rotary shaft for accommodating bearing balls, as an example.

In the arrangement of Figure 4 wherein the parallel facing core type rotary transformer 50 is disposed radially outwardly of the bearing 53, a sufficient core-facing area of the rotary transformer 50 cannot be provided for a smaller drum diameter, since the bearing 53 is required to have a certain thickness, as stated above. The result is that the signal transmission characteristics of the rotary transformer 50 are significantly lowered.

In the arrangement of Figure 5 wherein a cylindrical rotary transformer 60 is arranged outside the bearing 63 for assuring the core-facing area of the rotary transformer 60, it is also impossible to provide a sufficient thickness of the fixed core 61 or of the rotary core 68 of the rotary transformer 60 for a smaller drum diameter, and difficulties in the assembly operation are increased with a significantly lowered operational efficiency.

In order to overcome these problems inherent in rotary magnetic head devices in which the rotary transformers 50 and 60 are accommodated outside the bearings 53 and 63, as shown in Figures 4 and 5, it has also been proposed to provide an arrangement in which the rotary transformer 70 is disposed above the bearing 73, as shown in Figure 6. In this case, the overall thickness of the device is increased in inverse proportion to the reduction in the drum diameter, so that it becomes impossible to realize the thin type rotary magnetic head device.

It will be noted that, in the above-described devices, while the upper drum 55, 65 and 75 are provided with upright wall sections 55a, 65a and 75a serving as the guide surfaces for the magnetic tape, so that they have a predetermined height, a dead space exists in the upper drums 55, 65 and 75 for smoothing their rotation. that they have a predetermined height, a dead space exists in the upper drums 55, 65 and 75 for smoothing their rotation.

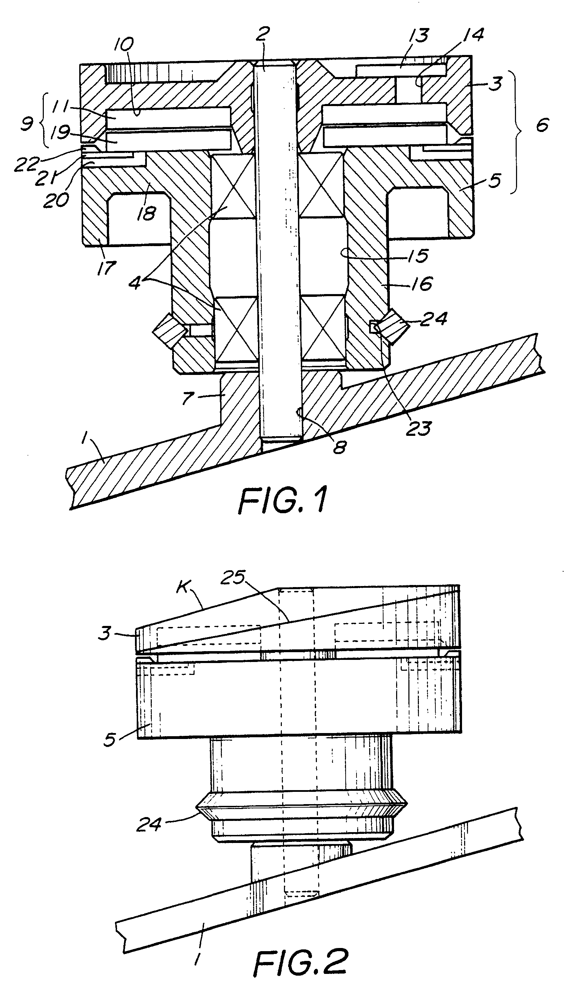

European patent specification EP-A1-0 064 765 discloses, for example, in Figure 1, a rotary magnetic head device comprising a fixed cylindrical upper drum and a fixed cylindrical lower drum; a magnetic tape being wrapped at a predetermined wrapping angle on the outer peripheral surface of the lower and upper drums so as to be guided along said drums. The upper drum has a fixed core of a rotary transformer disposed in an interior space on the lower side of the upper drum directed towards the lower drum, while the rotary core of the rotary transformer is mounted on a rotor which is placed between the lower and upper drums and which carries the magnetic heads.

According to the present invention there is provided a rotary magnetic head device comprising:

a chassis;

a fixed shaft;

a fixed cylindrical upper drum fixedly mounted on the upper end of said fixed shaft;

a rotary cylindrical lower drum rotatably mounted by a bearing on a portion of said fixed shaft disposed between said chassis and said upper drum, said lower drum carrying a magnetic head projecting a small distance from the outer periphery of said lower drum and being rotatable by driving means;

a magnetic tape being wrapped at a predetermined wrapping angle on the outer peripheral surface of said lower drum and said upper drum so as to be guided along said drums, said lower drum being rotated by said driving means for recording and/or reproducing signals on and from said magnetic tape by said magnetic head;

said fixed shaft having its lower end secured to said chassis with a tilt of a predetermined angle;

said upper drum having a fixed core of a rotary transformer disposed in an interior space on the lower side thereof directed towards said chassis; and

said lower drum having a rotary core of said rotary transformer disposed on the upper side thereof directed towards said upper drum in a facing relation to said fixed core.

The invention will now be described by way of example with reference to the accompanying drawings, throughout which like parts are referred to by like references, and in which:

Figure 1 is a diagrammatic cross-sectional side view showing an embodiment of belt drive system rotary magnetic head device according to the present invention;

Figure 2 is a side elevation of the device of Figure 1, with a portion of the upper drum thereof cut obliquely;

Figure 3 is a diagrammatic cross-sectional side view showing a modified embodiment of direct drive type rotary magnetic head device;

Figures 4 to 6 are diagrammatic cross-sectional side views showing known upper rotative drum type rotary magnetic head devices;

Figure 4 shows one such device in which the rotary transformer is placed horizontally outside the bearing;

Figure 5 shows another such device in which the rotary transformer is placed horizontally outside the bearing; and

Figure 6 shows a further such device in which the rotary transformer is placed horizontally above the bearing.

As shown in Figure 1, the embodiment of rotary magnetic head device according to the present invention includes a fixed shaft 2 mounted on a mounting base plate or chassis 1 in the main body of a magnetic recording and reproducing apparatus, not shown, with a tilt of a predetermined angle, an upper or fixed drum 3 fixedly mounted on the upper end of the fixed shaft 2, and a lower or rotary drum 5 rotated by a separate driving unit, such as an electric motor, not shown. The lower drum is mounted on bearings 4, 4 for rotation relative to the fixed shaft 2, with the upper drum 3 and the lower drum 5 making up a tape guide drum 6.

The fixed shaft 2 is supported by being press-fitted in an aperture 8 bored in a head attachment boss 7 formed in the chassis 1.

The upper drum 3 has its outer peripheral surface formed as the tape guide surface, and has on its lower side a recess 10 for housing a rotary transformer 9. On the bottom surface of the recess 10 is secured the fixed core 11 of the rotary transformer 9.

A transmission coil placed about the fixed core 11 of the rotary transformer 9 is connected by way of a through-hole 14 to a terminal plate 13 attached to an upper portion of the upper drum 3, so as to be connected to a separate electric circuit, not shown, provided inside the magnetic recording and reproducing apparatus.

In association with the reduction in the size of the magnetic head device, the wrapping angle of the magnetic tape about the tape guide drum 6 can be reduced, so that the electrical connection can be made sufficiently easily from the terminal plate 13 into the inside of the main body of the magnetic recording and/or reproducing apparatus.

The lower drum 5 is made up of an inner peripheral section 16 defining at the axis thereof an insertion aperture 15 for insertion of the fixed shaft 2, and an outer peripheral section 17 serving as the tape guide surface. The bearings 4, 4 are mounted at the upper and lower ends of the insertion aperture 15 for supporting the lower drum 5 for rotation with respect to the fixed shaft 2.

The outer peripheral section 17 of the lower drum 5 extends downwards from the radially outer end of a connecting portion 18 provided at an upper end of the inner peripheral section 16, so that the outer peripheral surface of the section 17 serves as the tape guide surface. On the upper surface of the connecting portion 18 is secured a rotary core 19 of the rotary transformer 9, so as to be substantially accommodated within the recess 10 of the upper drum 3 in a facing relation to the fixed core 11 of the rotary transformer 9.

The upper end of the outer peripheral section 17 is partially formed with an attachment recess 20 for a magnetic head 22. To the lower end of the rotary core 19 of the rotary transformer 9 in register with the attachment recess 20, the magnetic head 22 is mounted by a head attachment base plate 21, so that the tape contact surface at the leading part of the magnetic head 22 will face towards the outside at a gap or interstice formed between the upper drum 3 and the lower drum 5.

In such manner, the fixed and rotary cores 11 and 19 of the rotary transformer 9 are accommodated within the recess 10 of the upper drum 3 that has been a dead space in the known upper rotative drum type rotary magnetic head devices, so that the inner space of the upper drum 3 of the tape guide drum 6 can be effectively used to procure a sufficient core-facing area of the rotary transformer 9, to reduce the overall size and the thickness of the rotary magnetic head device.

The rotational driving of the lower drum 5 is achieved by what is called a belt driving system in which a belt 24 is engaged in a belt engaging groove 23 formed at the lower end of the inner peripheral section 16 of the lower drum 5 so as to be rotated by an electric motor, not shown, for causing the rotation of the lower drum 5.

In the above-described embodiment, the magnetic tape is guided along a tape path delimited by a lead part 25 formed integrally with the upper drum 3 on the outer periphery thereof, with the tape edge being in pressure contact with the lead part 25, as the tape runs along the contour of the tape guide drum 6, as shown in Figure 2, so that the tape contact surface of the magnetic head 22 slidingly contacts the magnetic tape with a predetermined tilt.

In a cassette type magnetic recording and/or reproducing apparatus in which the magnetic tape is housed in the cassette and is taken out therefrom by tape loading means so as to be wrapped on the rotary head device, or in which the cassette and the rotary head device are moved relative to each other on the chassis for introducing the rotary head device relative to the magnetic tape in the cassette, since the upper drum 3 of the magnetic head device is fixed, it is possible partially to cut the upper end of the upper drum 3 parallel to the chassis 1 to provide a cut surface k as shown in Figure 2 in conformity with the height of an opened lid or of an upper half of a cassette mouth of a cassette mounted parallel to the chassis 1. Therefore, since the overall thickness and vertical height from the chassis 1 of the rotary magnetic head device can easily be reduced to be smaller than the height of the opened lid or of the upper half of the cassette when in the attached state, embodiments of the rotary magnetic head device of the present invention can be applied to cassette magnetic recording and/or reproducing apparatus in which the rotary magnetic head device is introduced into the inside of the cassette mouth.

Although a belt drive system is used in the above described embodiment for rotating the lower drum 5, a so-called direct-drive rotative driving device may also be used in which, as shown in the modified embodiment of Figure 3, a rotor magnet 31 is disposed at the lower end of the lower drum 30 and a stator coil 33 is mounted on an attachment base plate 32 in opposition to the rotor magnet 31, so that an electric motor unit is disposed within the interior of the lower drum 30.

## Claims

1. A rotary magnetic head device comprising:
a chassis (1);
a fixed shaft (2);
a fixed cylindrical upper drum (3) fixedly mounted on the upper end of said fixed shaft (2);
a rotary cylindrical lower drum (5) rotatably mounted by a bearing (4, 4) on a portion of said fixed shaft (2) disposed between said chassis (1) and said upper drum (3), said lower drum (5) carrying a magnetic head (22) projecting a small distance from the outer periphery of said lower drum (5) and being rotatable by driving means;
a magnetic tape being wrapped at a predetermined wrapping angle on the outer peripheral surface of said lower drum (5) and said upper drum (3) so as to be guided along said drums (5, 3), said lower drum (5) being rotated by said driving means for recording and/or reproducing signals on and from said magnetic tape by said magnetic head (22);
said fixed shaft (2) having its lower end secured to said chassis (1) with a tilt of a predetermined angle;
said upper drum (3) having a fixed core (11) of a rotary transformer (9) disposed in an interior space (10) on the lower side thereof directed towards said chassis (1); and
said lower drum (5) having a rotary core (19) of said rotary transformer (9) disposed on the upper side thereof directed towards said upper drum (3) in a facing relation to said fixed core (11).

2. A device according to claim 1 wherein the outer peripheral surface of said upper drum (3) is provided with a leading part (25) for guiding the edge of the magnetic tape.

3. A device according to claim 2 wherein said leading part (25) is formed integrally with said upper drum (3).

4. A device according to claim 1 wherein said lower drum (5) is rotated by a belt (24) which transmits the driving force from said driving means.

5. A device according to claim 4 further comprising belt engaging means (16) between said lower drum (5) and said chassis (1) for engaging said belt (24).

6. A device according to claim 5 wherein a groove (23) engaged by said belt (24) is formed on the outer peripheral surface of said belt engaging means (16).

7. A device according to claim 1 wherein a rotor magnet (31) is provided on the chassis side of said lower drum (5) and a stator coil (33) is disposed on said chassis (1) in opposition to said rotor magnet (31), said stator coil (33) being energized with an electric current for rotating said lower drum (5).

8. A device according to claim 1 wherein a recess (10) for accommodating said rotary transformer (9) is formed on the side of said upper drum (3) directed towards said lower drum (5), said recess (10) accommodating both said fixed core (11) fixed to said upper drum (3) and said rotary core (19) fixed to the side of said lower drum (5) directed towards said upper drum (3).

9. A device according to claim 1 wherein said magnetic head (22) is attached to said rotary core (19) through a magnetic head attachment plate (21).

10. A device according to claim 9 wherein said magnetic head attachment plate (21) is secured to the side of said rotary core (19) opposite to the side thereof facing said fixed core (11).

11. A device according to any one of the preceding claims wherein a recess is formed on the upper surface of said upper drum (3) for accommodating a terminal plate (13) for connection to a transmission coil of said fixed core (11).

12. A device according to any one of the preceding claims wherein a recess is formed on the upper surface of said upper drum (3) for accommodating a terminal plate (13) for connection to a transmission coil of said fixed core (11).

13. A device according to any one of the preceding claims wherein a cut surface (k) is formed on the upper surface of said upper drum (3).

14. A device according to claim 13 wherein said cut surface (k) extends substantially parallel to said chassis (1).

15. A device according to claim 13 or claim 14 for use in conjunction with a recording and/or reproducing apparatus of the type in which a cassette with a magnetic tape enclosed therein is used and said cassette is mounted parallel to said chassis (1), said magnetic tape being taken out by an associated tape loading system by way of a cassette mouth from the inside of said cassette when a lid of said cassette is open, or in which said cassette and said upper and lower drums (3, 5) are relatively moved parallel to said chassis (1) for introducing said upper and lower drums (3, 5) into a cassette mouth for placing said tape about said upper and lower drums (3, 5), and wherein said cut surface (k) is formed so that the vertical height of said upper and lower drums (3, 5) relative to said chassis (1) is lower than that of the upper half of said cassette or of said opened lid.

**Revendications**

1. Dispositif à tête magnétique rotative, comprenant :
   un châssis (1),
   un arbre fixe (2),
   un tambour supérieur cylindrique fixe (3) monté à demeure à l'extrémité supérieure de l'arbre fixe (2),
   un tambour inférieur cylindrique rotatif (5) monté afin qu'il puisse tourner dans un palier (4, 4) sur une partie de l'arbre fixe (2) disposée entre le châssis (1) et le tambour supérieur (3), le tambour inférieur (5) portant une tête magnétique (22) qui dépasse d'une faible distance de la périphérie externe du tambour inférieur (5) et étant entraîné en rotation par un dispositif d'entraînement,
   une bande magnétique étant enroulée avec un angle prédéterminé à la surface périphérique externe du tambour inférieur (5) et du tambour supérieur (3) afin qu'elle soit guidée le long des tambours (5, 3), le tambour inférieur (5) étant entraîné en rotation par le dispositif d'entraînement destiné à l'enregistrement et/ou la lecture de signaux sur la bande magnétique à l'aide de la tête magnétique (22),

l'arbre fixe (2) ayant son extrémité inférieure qui est fixée au châssis (1) avec une inclinaison d'angle prédéterminée,

le tambour supérieur (3) ayant un noyau fixe (11) d'un transformateur rotatif (9) placé dans un espace interne (10) formé à sa face inférieure et dirigé vers le châssis (1), et

le tambour inférieur (5) ayant un noyau rotatif (19) du transformateur rotatif (9) disposé à sa face supérieure et dirigé vers le tambour supérieur (3) en face du noyau fixe (11).

2. Dispositif selon la revendication 1, dans lequel la surface périphérique externe du tambour supérieur (3) a une partie de guidage (25) destinée à guider le bord de la bande magnétique.

3. Dispositif selon la revendication 2, dans lequel la partie de guidage (25) est formée en une seule pièce avec le tambour supérieur (3).

4. Dispositif selon la revendication 1, dans lequel le tambour inférieur (5) est entraîné en rotation par une courroie (24) qui transmet la force d'entraînement du dispositif d'entraînement.

5. Dispositif selon la revendication 4, comprenant en outre un dispositif (16) de coopération avec la courroie placé entre le tambour inférieur (5) et le châssis (1) et destiné à coopérer avec la courroie (24).

6. Dispositif selon la revendication 5, dans lequel une gorge (23) qui coopère avec la courroie (24) est formée à la surface périphérique externe du dispositif (16) de coopération avec la courroie.

7. Dispositif selon la revendication 1, dans lequel un aimant (31) de rotor est placé du côté du châssis du tambour inférieur (5) et un bobinage de stator (33) est disposé sur le châssis (1) en face de l'aimant du rotor (31), le bobinage de stator (33) étant alimenté par un courant électrique destiné à faire tourner le tambour inférieur (5).

8. Dispositif selon la revendication 1, dans lequel une cavité (10) destinée à loger le transformateur rotatif (9) est formée du côté du tambour supérieur (3) qui est dirigé vers le tambour inférieur (5), la cavité (10) logeant à la fois le noyau fixe (11) fixé au tambour supérieur (3) et le noyau rotatif (19) fixé au côté du tambour inférieur (5) dirigé vers le tambour rotatif supérieur (3).

9. Dispositif selon la revendication 1, dans lequel les bords radialement internes des noyaux fixe et rotatif (11, 19) du transformateur rotatif (9) recouvrent radialement une partie du palier (4, 4).

10. Dispositif selon la revendication 1, dans lequel la tête magnétique (22) est fixée au noyau rotatif (19) par l'intermédiaire d'une plaque (21) de fixation de tête magnétique.

11. Dispositif selon la revendication 10, dans lequel la plaque (21) de fixation de tête magnétique est fixée au côté du noyau rotatif (19) opposé au côté tourné vers le noyau fixe (11).

12. Dispositif selon l'une quelconque des revendications précédentes, dans lequel une cavité est formée à la face supérieure du tambour supérieur (3) pour le logement d'une plaque à bornes (13) destinée à assurer la connexion à un bobinage de transmission du noyau fixe (11).

13. Dispositif selon l'une quelconque des revendications précédentes, dans lequel une surface découpée (k) es formée à la face supérieure du tambour supérieur (3).

14. Dispositif selon la revendication 13, dans lequel la surface découpée (k) est pratiquement parallèle au châssis (1).

15. Dispositif selon la revendication 13 ou 14 destiné à être utilisé avec un appareil d'enregistrement et/ou de lecture du type dans lequel une cassette entourant une bande magnétique est utilisée et la cassette est montée parallèlement au châssis (1), la bande magnétique étant extraite par un système associé de chargement de bande par l'intermédiaire d'une embouchure de cassette, depuis l'intérieur de la cassette lorsqu'un couvercle de la cassette est ouvert, ou dans lequel la cassette et les tambours supérieur et inférieur (3, 5) sont déplacés mutuellement parallèlement au châssis (1) afin que les tambours supérieur et inférieur (3, 5) soient introduits dans une embouchure de cassette et que la bande soit placée autour des tambours supérieur et inférieur (3, 5), et dans lequel la surface découpée (k) est formée de manière que la hauteur verticale des tambours supérieur et inférieur (3, 5) par rapport au châssis (1) soit inférieure à celle de la moitié supérieure de la cassette ou du couvercle ouvert.

## Ansprüche

1. Drehmagnetkopf-Einrichtung, die umfaßt:
   ein Chassis (1),
   eine stationäre Achse (2),
   eine stationäre zylindrische obere Trommel (3), die fest auf dem oberen Ende der stationären Achse (2) montiert ist,
   eine rotierende zylindrische untere Trommel (5), die drehbar durch ein Lager (4, 4) auf einem Abschnitt der stationären Achse (2) montiert ist, der zwischen dem Chassis (1) und der oberen Trommel (3) angeordnet ist, wobei die untere Trommel (5) einen Magnetkopf (22) trägt, der um eine kleine Distanz von dem äußeren Umfang der unteren Trommel (5) vorsteht und durch ein Antriebsmittel drehbar ist,
   ein Magnetband, das bei einem vorbestimmten Wickelwinkel so auf die äußere Umfangsoberfläche der unteren Trommel (5) und der oberen Trommel (3) gewickelt ist, daß es längs der Trommeln (5, 3) geführt wird, wobei die untere Trommel (5) durch das Antriebsmittel zum Aufzeichnen und/oder Wiedergeben von Signalen auf dem oder von dem Magnetband durch den Magnetkopf (22) gedreht wird,
   welche stationäre Achse (2) mit ihrem unteren Ende an dem Chassis (1) mit einer Neigung eines vorbestimmten Winkels befestigt ist,
   welche obere Trommel (3) einen stationären Kern (11) eines Drehülbertragers (9) hat, der in einem Innenraum (10) auf der unteren Seite derselben angeordnet ist, die auf das Chassis (1) gerichtet ist, und
   welche untere Trommel (5) einen rotierenden Kern (19) des Drehübertragers (9), der auf der oberen Seite desselben angeordnet ist, die auf die obere Trommel (3) gerichtet ist, in einer gegenüberstehenden Beziehung zu dem stationären Kern (11) aufweist.

2. Einrichtung nach Anspruch 1, bei der die äußere Umfangsoberfläche der oberen Trommel (3) mit einem Führungsteil (25) zum Führen des Randes des Magnetbands versehen ist.

3. Einrichtung nach Anspruch 2, bei der der Führungsteil (25) einstückig mit der oberen Trommel ausgebildet ist.

4. Einrichtung nach Anspruch 1, bei der die untere Trommel (5) durch einen Riemen (24) gedreht wird, der die Antriebskraft von dem Antriebsmittel überträgt.

5. Einrichtung nach Anspruch 4, die ferner ein Riemeneingreifmittel (16) zwischen der unteren Trommel (5) und dem Chassis (1) zum Eingreifen mit dem Riemen (24) umfaßt.

6. Einrichtung nach Anspruch 5, bei der eine Nut (23), die mit dem Riemen (24) in Eingriff steht, auf der äußeren Umfangsoberfläche des Riemeneingreifmittels (16) gebildet ist.

7. Einrichtung nach Anspruch 1, bei der ein Rotormagnet (31) auf der Chassisseite der unteren Trommel (5) und eine Statorspule (33) auf dem Chassis (1) dem Rotormagneten (31) gegenüberliegend vorgesehen sind, wobei die Statorspule (33) mit einem elektrischen Strom zum Drehen der unteren Trommel (5) erregt wird.

8. Einrichtung nach Anspruch 1, bei der eine Ausnehmung (10) zum Unterbringen des Drehübertragers (9) auf der Seite der oberen Trommel (3) gebildet ist, die auf die untere Trommel (5) gerichtet ist, wobei die Ausnehmung (10) sowohl den stationären Kern (11), der auf der oberen Trommel (3) befestigt ist, als auch den rotierenden Kern (19), der auf der Seite der unteren Trommel (5), die auf die obere Trommel (3) gerichtet ist, in sich aufnimmt.

9. Einrichtung nach Anspruch 1, bei der die radial inneren Ränder des stationären und des rotierenden Kerns (11, 19) des Drehübertragers (9) einen Teil des Lagers (4, 4) überlappen.

10. Einrichtung nach Anspruch 1, bei der der Magnetkopf (22) an dem rotierenden Kern (19) durch eine Magnetkopf-Anbringungsplatte (21) angebracht ist.

11. Einrichtung nach Anspruch 10, bei der die MagnetkopfAnbringungsplatte (21) an der Seite des rotierenden Kerns (19) gegenüberliegend der Seite desselben befestigt ist, die dem stationären Kern (11) gegenübersteht.

12. Einrichtung nach einem der vorhergehenden Ansprüche, bei der eine Ausnehmung in der oberen Oberfläche der oberen Trommel (3) zum Unterbringen einer Anschlußplatte (13) zur Verbindung mit einer Übertragerspule des stationären Kerns (11) gebildet ist.

13. Einrichtung nach einem der vorhergehenden Ansprüche, bei der eine Schnittfläche (k) auf der oberen Oberfläche der oberen Trommel (3) gebildet ist.

14. Einrichtung nach Anspruch 13, bei der sich die Schnittfläche (k) im wesentlichen parallel zu dem Chassis (1) erstreckt.

15. Einrichtung nach Anspruch 13 oder 14 zur Benutzung in Verbindung mit einem Aufzeichnungs- und/oder Wiedergabe-gerät des Typs, bei dem eine Kassette mit einem Magnetband, das in dieser eingeschlossen ist, benutzt wird und die Kassette parallel zu dem Chassis (1) in Position gebracht ist, wobei das Magnetband durch ein zugeordnetes Bandladesystem mittels einer Kassettenöffnung von der Innenseite der Kassette herausgezogen wird, wenn ein Verschluß der Kassette offen ist, oder bei der die Kassette und die obere und die untere Trommel (3, 5) relativ parallel zu dem Chassis (1) zum Einführen der oberen und der unteren Trommel (3, 5) in eine Kassettenöffnung zum Plazieren des Bandes um die obere und die untere Trommel (3, 5) bewegt werden und bei der die Schnittfläche (k) so ausgebildet wird, daß die vertikale Höhe der oberen und der unteren Trommel (3, 5) relativ zu dem Chassis (1) niedriger als die oberen Hälfte der Kassette oder der geöffnete Verschluß ist.

FIG.1

FIG.2

FIG.3

FIG.4

10

FIG.5

FIG.6